# EUROPÄISCHE PATENTANMELDUNG

(11) **EP 0 843 173 A1**
(43) Veröffentlichungstag der Anmeldung: **20.05.1998**
(21) Anmeldenummer: 96810808.4
(22) Anmeldetag: 18.11.1996
(51) Int. Cl.: G01N 21/55, G01N 21/05

(54) **Flusszelle sowie Vorrichtung zur Erzeugung evaneszent angeregter Strahlung**

(71) Anmelder: Novartis AG, 4058 Basel (CH)
(72) Erfinder: Die Erfindernennung liegt noch nicht vor

(57) **Zusammenfassung**

Bei einer Vorrichtung zur Erzeugung evaneszent angeregter Strahlung mit einem auf einem Substrat aufgebrachten Wellenleiter (7), auf dem eine Probensubstanz aufbringbar ist, ist eine auf den Wellenleiter (7) aufbringbare Flusszelle (1) vorgesehen, die über wenigstens eine sich zwischen wenigstens einem ersten Probenkanal (2) und wenigstens einem zweiten Probenkanal (3) erstreckende Ausnehmung (6) verfügt. Die oder jede Ausnehmung (6) ist zu einer dem Wellenleiter (7) zugewandten Oberfläche (5) offen, so dass im Bereich der Ausnehmungen (6) der Wellenleiter (7) zum Erzeugen evaneszent angeregter Strahlung mit einem Probenmaterial bedeckbar ist. Die Flusszelle (1) ist aus einem schmiegsamen, flexiblen Material, vorzugsweise ein transparentes Polymer, hergestellt, wobei bei Aufbringen der Flusszelle (1) auf den Wellenleiter (7) die oder jede Ausnehmung (6) dicht verschlossen ist. Die Ausnehmung (6) ist in Ausbreitungsrichtung von Ausgangsstrahlung dem Einkoppelelement (10) nachgeordnet, so dass an dem Einkoppelelement (10) hinsichtlich der Einkopplungsverhältnisse zu jeder Zeit definierte Verhältnisse herrschen und Anregungsstrahlung stets unter einem gleichen Einfallswinkel in den Wellenleiter (7) einkoppelbar ist.

## Beschreibung

Die Erfindung betrifft eine Flusszelle sowie eine Vorrichtung zur Erzeugung evaneszent angeregter Strahlung mit einem Wellenleiter, auf den Probensubstanz aufbringbar ist.

Auf dem Gebiet der insbesondere biochemischen Analytik sind in jüngerer Zeit Vorrichtungen zur Erzeugung evaneszent angeregter Strahlung, wie beispielsweise in der WO 95/33198 offenbart, entwickelt worden, die einen mit Probenmaterial bedeckten Wellenleiter aufweisen, in den Anregungsstrahlung einkoppelbar ist. In diesem Zusammenhang sind bislang zum Aufbringen von Probenmaterialien auf den Wellenleiter auch Flusszellen gebräuchlich, in die Probenmaterial einleitbar und auf den Wellenleiter aufbringbar sind. Die in den Wellenleiter eingekoppelte Anregungsstrahlung tritt in einen Randbereich der an den Wellenleiter angrenzenden Materie und insbesondere auch des Probenmaterials mit einem sogenannten evaneszenten Anteil, das heisst einem exponentiell abklingenden Anteil, ein und kann dort insbesondere bei fluoreszierende und/oder lumineszierende Moleküle enthaltenden Probenmaterialien sogenannte evaneszent angeregte Strahlung induzieren. Diese evaneszent angeregte Strahlung koppelt bei entsprechender Dimensionierung des Wellenleiters teilweise in diesen zurück, ist über ein Auskoppelelement aus dem Wellenleiter auskoppelbar und mit einer Detektionseinheit analysierbar. Alternativ oder zusätzlich ist in Abwandlungen eine Detektionseinheit vorgesehen, die mit isotrop in den Raum ausgestrahlten Anteilen von evaneszent angeregter Strahlung beaufschlagbar ist.

Obwohl mit auf diesem Verfahren arbeitenden herkömmlichen Vorrichtungen genaue Analysewerte im Forschungsbereich gewinnbar sind, besteht ein Bedarf nach einer Weiterentwicklung in Richtung eines routinemässigen Einsatzes mit entsprechend hohen Anforderungen an die mechanische und/oder messtechnische Handhabbarkeit.

Der Erfindung liegt die Aufgabe zugrunde, eine Flusszelle und eine Vorrichtung der eingangs genannten Art so weiterzubilden, dass eine routinemässige Handhabung insbesondere auch in Reihenuntersuchungen problemlos möglich ist.

Diese Aufgabe wird erfindungsgemäss mit einer Flusszelle nach Patentanspruch 1 gelöst. Diese Aufgabe wird bei einer Vorrichtung der eingangs genannten Art dadurch gelöst, dass eine Flusszelle gemäss Patentanspruch 1 auf den Wellenleiter aufgebracht ist.

Dadurch, dass die Flusszelle aus einem schmiegsamen Material besteht, das die wenigstens eine Ausnehmung bei Aufbringen auf den Wellenleiter dicht verschliesst, ist es ohne weitere Hilfsmittel wie Dichtungen möglich, durch Auflegen einer Flusszelle auf den Wellenleiter leckfrei Probenmaterial durch die Flusszelle zu leiten.

In Weiterbildungen sind mehrere Ausnehmungen vorgesehen, die längs oder quer zu der Ausbreitungsrichtung von Anregungsstrahlung angeordnet sind. Bei parallel zu der Ausbreitungsrichtung von Anregungsstrahlung ausgerichteten Ausnehmungen ist es zweckmässig, zwischen den Ausnehmungen im Eindringbereich von Anregungsstrahlung und evaneszent angeregter Strahlung im Spektralbereich dieser Strahlungen, beispielsweise vom ultravioletten bis infraroten Spektralbereich, absorbierendes Material vorzusehen, um ein Überkoppeln von Strahlungsanteilen zwischen den Ausnehmungen zu unterbinden. Dies kann beispielsweise durch eine absorbierende Schicht, die zwischen der Flusszelle und dem Wellenleiter aufgebracht wird, erfolgen. In einem anderen Ausführungsbeispiel sind zwischen mehreren parallel zu der Ausbreitungsrichtung von der Anregungsstrahlung ausgerichteten Ausnehmungen mit einer strahlungsabsorbierenden Flüssigkeit füllbare Dämpfungsausnehmungen in die Flusszelle eingebracht, die zu der gleichen Oberflächenseite wie die Ausnehmungen geöffnet sind.

Weiterhin ist es zweckmässig, dass alle einen ersten Probenkanal mit einer Ausnehmung verbindenden ersten Probendurchtrittsöffnungen sowie der an eine erste Probendurchtrittsöffnung angrenzende Bereich der Ausnehmung dem Einkoppelelement in Ausbreitungsrichtung von Anregungsstrahlung nachgeordnet ist und dass das Einkoppelelement von der Flusszelle bedeckt sind. Dadurch ergeben sich zum einen bei dem Einkoppelelement gleichbleibende Einkoppelbedingungen für die Anregungsstrahlung, zum anderen sind Brechungsindexsprünge im Eindringbereich von Anregungsstrahlung in die an den Wellenleiter angrenzende Materie weitestgehend minimiert, so dass eine weitgehend störungsfreie Führung der Anregungsstrahlung und evaneszent angeregter Strahlung in dem Wellenleiter geschaffen ist. In Weiterbildungen ist vorgesehen, dass ein in dem Wellenleiter eingebrachtes Auskoppelelement zur Auskopplung von evaneszent angeregter Strahlung ebenfalls von der Flusszelle bedeckt ist. Bei Vorsehen eines Auskoppelelementes ist es weiterhin zweckmässig, dass die oder jede Ausnehmung mit ihren an die erste Probendurchtrittsöffnung und an die die Ausnehmung mit dem zweiten Probenkanal verbindende zweite Probendurchtrittsöffnung zwischen dem Einkoppelelement und dem Auskoppelelement angeordnet ist. Dies führt zu einer hohen Signalausbeute und liefert beispielsweise auch unter häufig nicht ganz optimalen Untersuchungsbedingungen im routinemässigen Einsatz noch verwertbare Analyseergebnisse.

Weitere Vorteile und zweckmässige Ausgestaltungen sind Gegenstand der Unteransprüche sowie der nachfolgenden Beschreibung von Ausführungsbeispielen unter Bezug auf die Figuren der Zeichnung. Es zeigen:
- Fig. 1: in einer perspektivischen Darstellung eine Vorrichtung zur Erzeugung evaneszent angeregter Strahlung mit einer auf einem Schichtwellenleiter angebrachten Flusszelle,
- Fig. 2: die Vorrichtung gemäss Fig. 1 in Draufsicht,
- Fig. 3: die Flusszelle gemäss Fig. 1 in einer Seitenansicht auf eine Längsseite,
- Fig. 4: die Flusszelle gemäss Fig. 1 in einer Seitenansicht auf eine Stirnseite
- Fig. 5: die Vorrichtung gemäss Fig. 1 mit dem Verlauf des Brechungsindex in Längsrichtung in dem an den Wellenleiter angrenzenden Material,
- Fig. 6: eine gegenüber Fig. 2 abgewandelte Anordnung des Auslasskanales,
- Fig. 7: eine Vorrichtung zur Erzeugung evaneszent angeregter Strahlung mit einer auf einem Schichtwellenleiter angeordneten Flusszelle mit jeweils drei Probenkanälen und zwischenliegenden Ausnehmungen sowie mit einer auf den Schichtwellenleiter aufgebrachten Dämpfungsschicht,
- Fig. 8: die Vorrichtung gemäss Fig. 7 in Draufsicht,
- Fig. 9: eine Vorrichtung zur Erzeugung evaneszent angeregter Strahlung mit einer auf einem Schichtwellenleiter aufgebrachten Flusszelle mit jeweils drei Probenkanälen und drei zwischenliegenden Ausnehmungen sowie mit zwischen zwei Ausnehmungen vorgesehenen Dämpfungskanalanordnungen,
- Fig. 10: die Vorrichtung gemäss Fig. 10 in Draufsicht, und
- Fig. 11 und 12: verschiedene Anordnungen von Ausnehmungen in Flusszellen für Simultanmessungen.

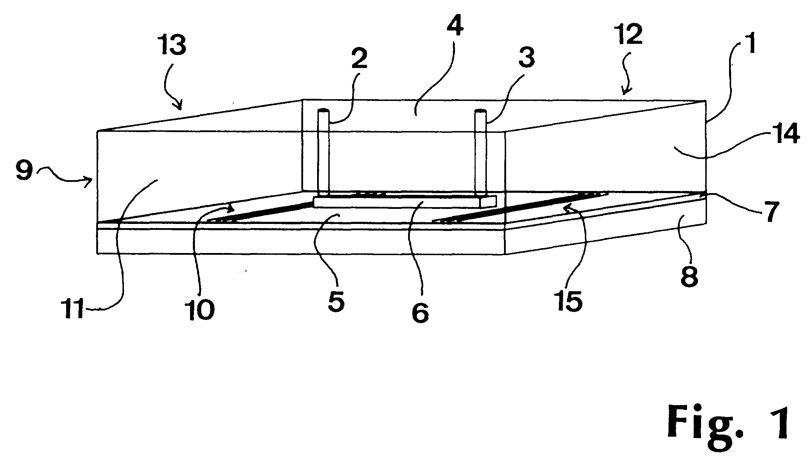

Fig. 1 zeigt in einer perspektivischen Ansicht eine aus einem schmiegsamen Material bestehende Flusszelle 1. Die in Fig. 1 dargestellte Flusszelle 1 ist aus einem elastischen, biegsamen Polymermaterial gefertigt, das wenigstens in sichtbaren und nahen infraroten Spektralbereich für elektromagnetische Strahlung transparent ist. Als Polymermaterial ist vorzugsweise ein Polydimethylsiloxan wie beispielsweise Sylgard 182 beziehungsweise Sylgard 184 (Dow Corning) oder aus der RTVE-Serie (Raumtemperatur-Vernetzbare Elastomere, Wacker Chemitronic) vorgesehen. Insbesondere durch die einfach durch ein Abformverfahren herstellbare Flusszelle 1 ist neben einer Wiederverwendung auch eine Einmalbenutzung noch wirtschaftlich sinnvoll. Die Flusszelle 1 verfügt über einen Einlasskanal 2 als ersten Probenkanal und einen Auslasskanal 3 als zweiten Probenkanal zum Einlass beziehungsweise Auslass von Probenflüssigkeit, wobei diese Funktionen austauschbar sind. Der Einlasskanal 2 und der Auslasskanal 3 erstrecken sich zwischen einer Deckfläche 4 und einer in einer der Deckfläche 4 gegenüberliegenden Auflagefläche 5 eingebrachten Ausnehmung 6 als Fliesskanal. Die Ausnehmung 6 ist an ihrer der Auflagefläche 5 zugewandten Seite offen und erstreckt sich zwischen dem Einlasskanal 2 und dem Auslasskanal 3.

In der Darstellung gemäss Fig. 1 ist die Flusszelle 1 selbsthaftend an einem Schichtwellenleiter 7 beispielsweise aus TiO₂ oder Ta₂O₅ angebracht. In einer Abwandlung ist vorgesehen, die Flusszelle 1 mit einem Haftmittel wie beispielsweise einem transparenten Klebstoff an dem Schichtwellenleiter zu befestigen. Dadurch ist die Ausnehmung 6 dicht verschlossen, so dass ein Flüssigkeitsstrom, der ein zu untersuchendes Probenmaterial enthält, durch den Einlasskanal 2, die Ausnehmung 6 und den Auslasskanal 3 strömen kann. Da das Material der Flusszelle 1 schmiegsam ist, passt es sich flexibel der Oberflächenstruktur des Wellenleiters 7 an und führt somit zu einer Abdichtung, ohne dass weitere Dichtelemente notwendig sind.

Der verhältnismässig dünne Schichtwellenleiter 7 ist auf einem mechanisch stabilen Substrat 8 beispielsweise aus Glas oder einem Polykarbonat aufgebracht und mit diesem fest verbunden. In dem in Fig. 1 dargestellten Ausführungsbeispiel bilden die Flusszelle 1, der Wellenleiter 7 und das Substrat 8 einen quaderförmigen Körper mit bündig abschliessenden seitlichen Begrenzungsflächen. In Abwandlungen sind andere Geometrien wie beispielsweise Ellipsoide, regelmässige oder unregelmässige Vielecke auch mit trapezförmigem Querschnitt vorgesehen.

In den Schichtwellenleiter 7 gemäss Fig. 1 ist quer zu der Ausrichtung der Ausnehmung 6 zwischen einer dem Einlasskanal 2 benachbarten Stirnseite 9 und dem Einlasskanal 2 ein Einkoppelgitter 10 als dispersives Einkoppelelement eingebracht, das sich im wesentlichen zwischen den beiden parallel zu der Ausnehmung 6 verlaufenden Seitenflächen 11, 12 einer durch die Flusszelle 1, den Schichtwellenleiter 7 und das Substrat 8 gebildeten Analyseeinheit 13 erstreckt. In dem in Fig. 1 dargestellten Ausführungsbeispiel ist parallel zu dem Einkoppelgitter 10 zwischen dem Auslasskanal 3 und einer auslasseitigen Stirnseite 14 als dispersives Auskoppelelement ein Auskoppelgitter 15 in den Schichtwellenleiter 7 eingebracht.

In Abwandlungen sind mehrere Einkoppelgitter und/oder Auskoppelgitter vorgesehen, die als Einkoppelelemente beziehungsweise Auskoppelelemente dienen. Bei einem Erfassen von isotrop in den Raum gestreuten Anteilen von evaneszent angeregter Strahlung sind Auskoppelelemente verzichtbar.

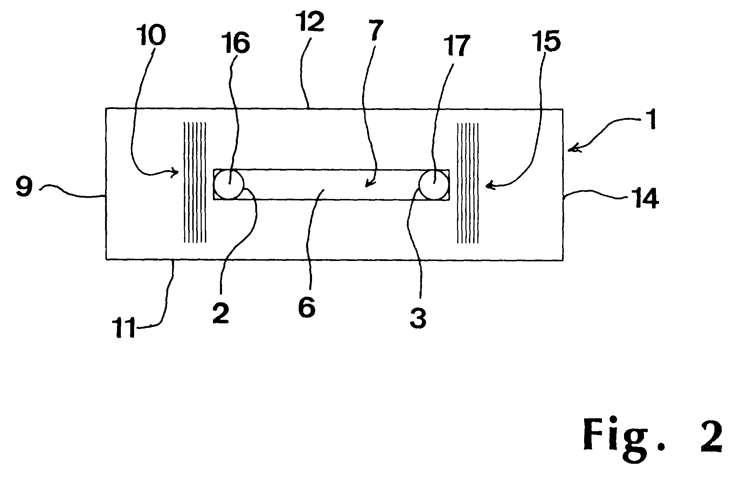

Fig. 2 zeigt eine Draufsicht auf die Deckfläche 4 der Flusszelle 1. Aus Fig. 2 ist ersichtlich, dass sich die Ausnehmung 6 jeweils mit einem Randabstand zwischen dem Einkoppelgitter 10 und dem Auskoppelgitter 15 erstreckt, so dass sowohl das Einkoppelgitter 10 als auch das Auskoppelgitter 15 frei von einer durch den Einlasskanal 2, die Ausnehmung 6 und den Auslasskanal 3 strömenden Probenflüssigkeit ist.

Sowohl der Einlasskanal 2 als auch der Auslasskanal 3 weisen einen runden oder einen nicht dargestellten vieleckigen Querschnitt auf und münden in einer Einlassöffnung 16 als erster Probendurchtrittsöffnung beziehungsweise einer Auslassöffnung 17 als zweiter Probendurchtrittsöffnung in die Ausnehmung 6. In dem in Fig. 2 dargestellten Ausführungsbeispiel sind die Einlassöffnung 16 und die Auslassöffnung 17 unmittelbar an den jeweils dem Einkoppelgitter 10 und dem Auskoppelgitter 15 zugewandten Enden der Ausnehmung 6 angeordnet, wobei der Einlasskanal 2 und der Auslasskanal 3 rechtwinklig zu der Ausnehmung 6 in die Flusszelle 1 eingebracht sind. In einer Abwandlung sind der Einlasskanal 2 und der Auslasskanal 3 schiefwinklig zu der Ausnehmung 6 angeordnet, um den Strömungswiderstand im Bereich der Einlassöffnung 16 und der Auslassöffnung 17 gegenüber einer rechtwinkligen Anordnung zu verringern.

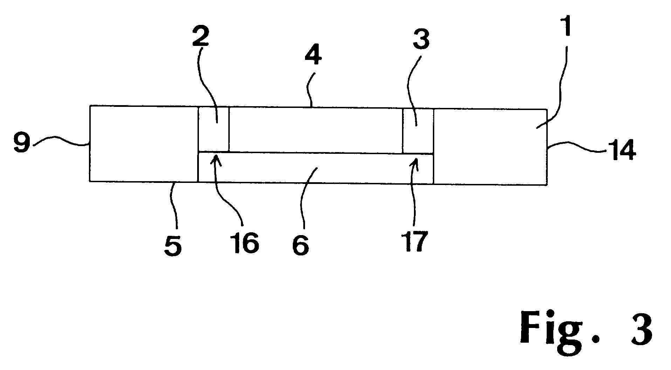

Fig. 3 zeigt in einer Seitenansicht die transparente Flusszelle 1 gemäss Fig. 1 und Fig. 2. In dieser Ansicht ist deutlich die rechtwinklige Ausrichtung der Ausnehmung 6 zu dem Einlasskanal 2 und dem Auslasskanal 3 zu erkennen. Die Tiefe der Ausnehmung 6 hängt im wesentlichen von den Fliesseigenschaften einer durchströmenden Probenflüssigkeit und den Diffussionseigenschaften von zu analysierenden Molekülen ab und liegt zwischen etwa 1 µm und 1000 µm.

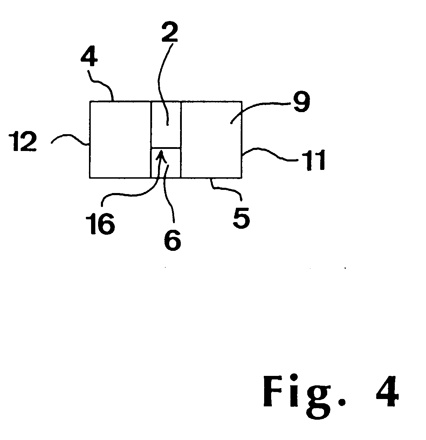

Fig. 4 zeigt in einer Ansicht auf die Stirnfläche 9 die Flusszelle 1 gemäss Fig 3. Der Querschnitt der in Fig. 4 dargestellten Ausnehmung 6 ist im wesentlichen quadratisch, wobei jedoch die Breite, das heisst die Erstreckung zwischen den Seitenflächen 11, 12 in Abhängigkeit der Fliesseigenschaften und/oder optischer Eigenschaften einer durchströmenden Probenflüssigkeit zwischen 10 µm und 40 mm liegt.

Dabei ist der Übergang von der Flusszelle 1 zu der oder jeder Ausnehmung 6 bevorzugt durch ein in Richtung der Ausnehmung weisendes, sich verjüngendes Zungenstück so ausgestaltet, dass die Änderung des Brechungsindex im Bereich des evaneszenten Feldes beim Übergang von Material der Flusszelle 1 zu einer in der oder jeder Ausnehmung 6 enthaltenen Probenflüssigkeit kontinuierlich ohne Sprünge erfolgt. Dies wird beispielsweise durch ein ellipsoides Profil im Bereich des evaneszenten Feldes erreicht.

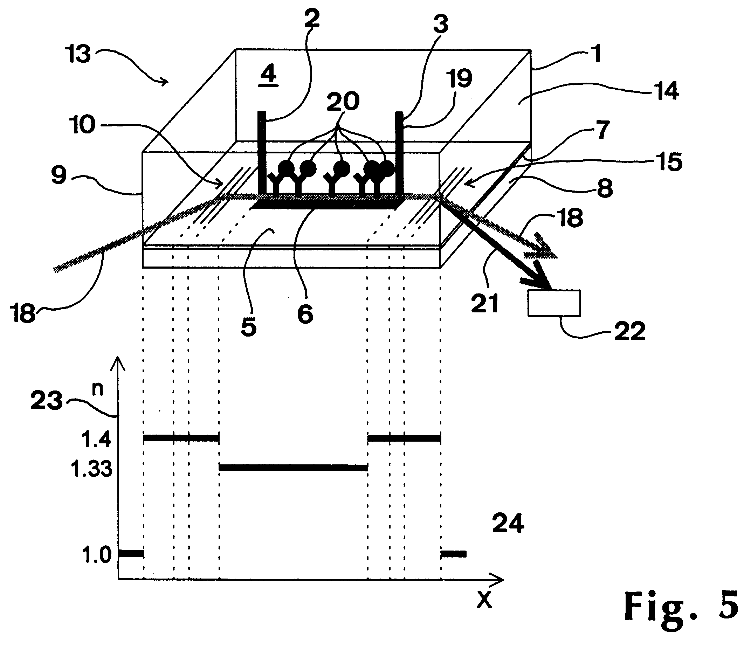

Fig. 5 zeigt in einer perspektivischen Ansicht eine im Bereich des Einkoppelgitters 10 mit Anregungsstrahlung 18 aus einer in Fig. 5 nicht dargestellten Lichtquelle beaufschlagte Vorrichtung zum Erzeugen evaneszent angeregter Strahlung mit der Flusszelle 1, dem auf einem Substrat 8 aufgebrachten Schichtwellenleiter 7 sowie mit einer durch den Einlasskanal 2, die Ausnehmung 6 und den Auslasskanal 3 strömenden Probenflüssigkeit 19. Die Probenflüssigkeit 19 enthält beispielsweise symbolisch dargestellte lumineszierende, zu analysierende Moleküle 20.

Die auf das Einkoppelgitter 10 auftreffende Anregungsstrahlung 18 ist durch Beugung in den Schichtwellenleiter 7 eingekoppelt und breitet sich als geführte Welle in Richtung des Auskoppelgitters 15 aus. Im Bereich der in Richtung des Schichtwellenleiters 7 offenen Ausnehmung 6 der Flusszelle 1 werden die in der Probenflüssigkeit 19 enthaltenen lumineszierenden Moleküle 20 durch den sogenannten evaneszenten Anteil der Anregungsstrahlung 18, das heisst dem in das an den Wellenleiter 7 angrenzende Material eintretenden, exponentiell abklingenden Strahlungsanteil, zur Lumineszenz angeregt. Aufgrund der Transparenz des an den Wellenleiter 7 angrenzendes Bereiches der Flusszelle 1 sowohl für die Anregungsstrahlung 18 als auch für die Lumineszenzstrahlung erreicht die im Wellenleiter 7 geführte Anregungsstrahlung 18 den Bereich der Ausnehmung 6, in dem im evaneszent abklingenden Strahlungsteil Moleküle 20 angeregt werden können, deren Lumineszenzstrahlung als evaneszent angeregte Strahlung 21 teilweise in den Wellenleiter 7 zurückkoppelt. Aufgrund der Transparenz des an den Wellenleiter 7 angrenzenden Bereiches der Flusszelle 1 ist sowohl die transmittierte Anregungsstrahlung 18 als auch die in den Wellenleiter 7 eingekoppelte, evaneszent angeregte Strahlung 21 zu dem Auskoppelgitter 15 geführt.

Aufgrund der dispergierenden Wirkung des Auskoppelgitters 15 wird die Anregungsstrahlung 18 von der in der Regel frequenzverschobenen, evaneszent angeregten Strahlung 21 räumlich getrennt. In Ausbreitungsrichtung der evaneszent angeregten Strahlung 21 ist eine Detektionseinheit 22 vorgesehen, mit der beispielsweise die Intensität sowie deren spektrale Verteilung analysierbar ist

Weiterhin ist in Fig. 5 der mit "n" bezeichnete, auf der Ordinate 23 abgetragene Brechungsindex in Abhängigkeit der auf der Abszisse 24 abgetragenen, mit "X" gekennzeichneten Position in Längsrichtung im Eindringbereich der evaneszent angeregten Strahlung 21 dargestellt. Die unterschiedlichen Bereiche in Längsrichtung in bezug auf die Flusszelle 1 sind mit gestrichelten Linien auf die Abszisse 24 angedeutet. Ausserhalb der Flusszelle 1 herrscht in Luft ein Brechungsindex von n = 1,0. Zwischen der dem Einlasskanal 2 zugewandten Stirnseite 9 und dem der Stirnseite 9 zugewandten Ende der Ausnehmung 6 liegt ein Brechungsindex von n = 1,4 vor, der dem Brechungsindex des Materiales entspricht, aus dem die Flusszelle 1 hergestellt ist. Somit liegt in dem Bereich des Einkoppelgitters 10 ein gleichbleibender Brechungsindex vor, der die Einkopplung der Ausgangsstrahlung 18 unter einem bestimmten festen Winkel ermöglicht, der unabhängig von Eigenschaften der Probenflüssigkeit 19 ist.

Entsprechend liegen zwischen der dem Auslasskanal 3 benachbarten Stirnseite 14 und dem der Stirnseite 14 zugewandten Ende der Ausnehmung 6 der gleiche Brechungsindex n = 1,4 des Materiales der Flusszelle 1 vor, so dass auch hier konstante Brechungsindexverhältnisse im Bereich des Auskoppelgitters 15 herrschen. Im Bereich der Ausnehmung 6 herrscht der durch die optischen Eigenschaften der Probenflüssigkeit 19 bestimmte Brechungsindex, der bei dem in Fig. 5 dargestellten Ausführungsbeispiel bei n = 1,33 liegt.

Bei der in Fig. 5 dargestellten Anordnung ergibt sich eine weitgehend reflexionsfreie Einkopplung der Anregungsstrahlung 18 in den Wellenleiter 7 und eine aufgrund des nur verhältnismässig geringen Brechungsindexsprunges bei Eintritt des evaneszenten Anteiles der Anregungsstrahlung 18 in die Probenflüssigkeit ein hoher Anteil an weitergeführter Ausgangsstrahlung 18, so dass eine hohe Ausbeute an evaneszent angeregter Strahlung 21 erzielt ist. Durch den verhältnismässig geringen Brechungsindexsprung an dem dem Auskoppelgitter 15 zugewandten Ende der Ausnehmung 6 ist die Störung der evaneszent angeregten Strahlung 21 ebenfalls verhältnismässig gering, so dass bei Ablenkung durch das Auskoppelgitter 15 eine insgesamt hohe Signalausbeute erzielt ist. Dadurch ist es möglich, auch noch geringe Konzentrationen von lumineszierenden Molekülen 20 in der Probenflüssigkeit 19 nachzuweisen.

Die unterschiedlichen Bereiche in Längsrichtung in bezug auf die Flusszelle 1 sind mit gestrichelten Linien auf die Abszisse 24 angedeutet.

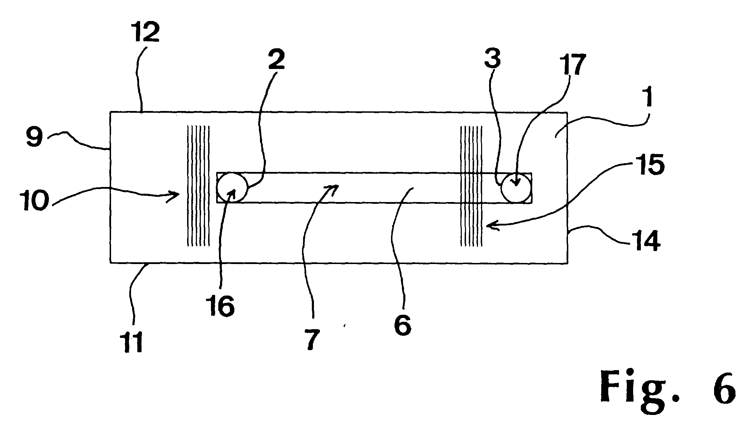

Fig. 6 zeigt in einer Abwandlung eine Flusszelle 1, deren Ausnehmung 6 sich von ihrem der zwischen dem Einkoppelgitter 10 und dem Auskoppelgitter 15 angeordneten Einlassöffnung 16 benachbarten Ende in den Bereich zwischen dem Auskoppelgitter 15 und der dem Auskoppelgitter 15 benachbarten Stirnseite 14 erstreckt, so dass die Ausnehmung 6 das Auskoppelgitter 15 überdeckt. Auch bei dieser Ausgestaltung ergibt sich eine hohe eingekoppelte Intensität von Anregungsstrahlung 18, die für die Intensität von evaneszent angeregter Strahlung 21 von vorrangiger Bedeutung ist, da gewisse optische Beeinträchtigungen im Bereich des Auskoppelgitters 15 gegenüber Störungen im Bereich des Einkoppelgitters 10 von untergeordneter Bedeutung sind.

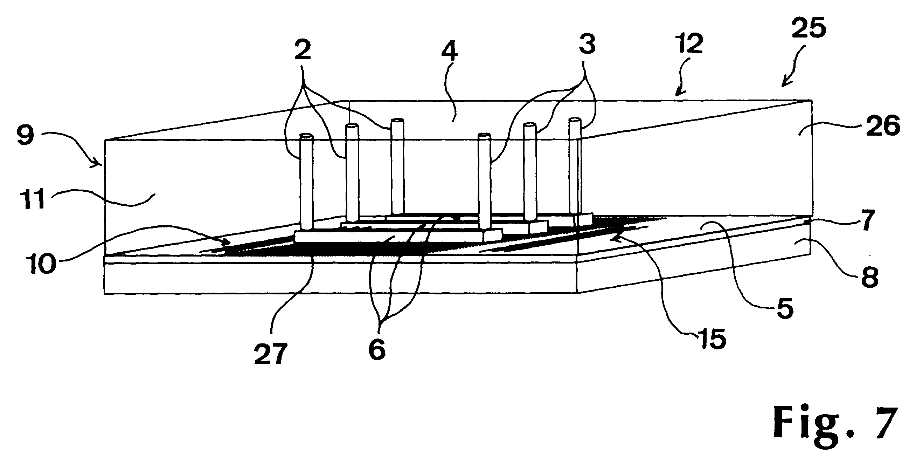

Fig. 7 zeigt eine Simultananalyseeinheit 25, die neben dem auf dem Substrat 8 aufgebrachten Schichtwellenleiter 7 mit Einkoppelgitter 10 und Auskoppelgitter 15 über eine Flusszelle 26 verfügt, die mit jeweils drei Einlasskanälen 2, Auslasskanälen 3 und sich zwischen einem Einlasskanal 2 und einem Auslasskanal 3 erstreckenden Ausnehmungen 6 versehen ist. In einer Abwandlung ist der Schichtwellenleiter 7 so in Streifenform strukturiert, dass ein Streifen des Schichtwellenleiters 7 einer Ausnehmung 6 gegenüberliegt.

Weiterhin ist auf den Schichtwellenleiter 7 beidseitig jeder Ausnehmung 6 eine im Spektralbereich von Anregungsstrahlung 18 und evaneszent angeregter Strahlung 21 absorbierende Dämpfungsschicht 27 aufgebracht, um ein Überkoppeln insbesondere von evaneszent angeregter Strahlung 21 von einer Ausnehmung 6 zu den beiden anderen Ausnehmungen 6 zu verhindern, das zu einer Verfälschung der Messergebnisse führen würde. Durch die jede Ausnehmung 6 längsseitig begrenzende Dämpfungsschicht 27 erfolgt eine starke Absorption von aus dem Bereich der Ausnehmungen 6 heraustretenden Strahlungsanteilen. Dadurch ist es möglich, in den drei Ausnehmungen 6 unterschiedliche Probenflüssigkeiten 19 gleichzeitig zu untersuchen, da auch bei Auskopplung durch das Auskoppelgitter 15 die jeweils evaneszent angeregten Strahlungen 21 räumlich quer zu der Ausbreitungsrichtung separiert sind.

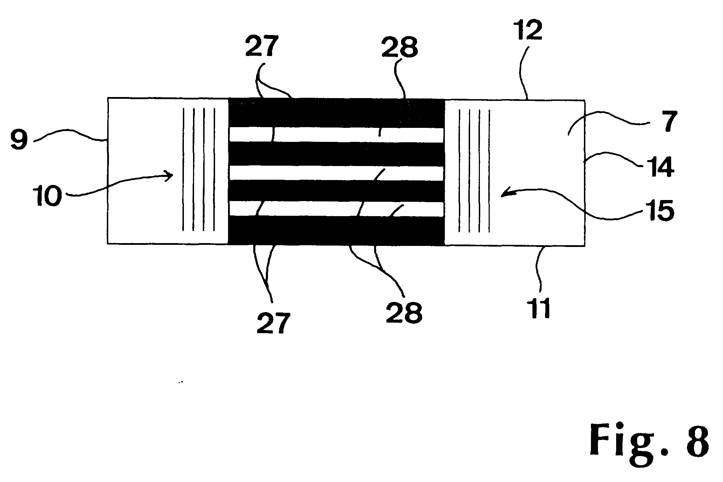

Fig. 8 zeigt eine Draufsicht auf den Schichtwellenleiter 7 der Simultananalyseeinheit 25 gemäss Fig. 7. Die sich zwischen dem Einkoppelgitter 10 und dem Auskoppelgitter 15 im wesentlichen über die volle Breite des Schichtwellenleiters 7 erstreckende Dämpfungsschicht 27 ist in jeweils parallel zu den Seitenflächen 11, 12 ausgerichteten Führungsbereichen 28 mit rechteckiger Grundfläche unterbrochen. Die Abmessungen der Führungsbereiche 28 entsprechen dabei den Dimensionen der dem Schichtwellenleiter 7 zugewandten Seite der in die Flusszelle 26 gemäss Fig. 7 eingebrachten Ausnehmungen 6. Somit wird über das Einkoppelgitter 10 in den Schichtwellenleiter 7 eingekoppelte Anregungsstrahlung 18 in Längsrichtung in den Führungsbereichen 28 zu dem Auskoppelgitter 15 geführt, ohne dass ein nennenswertes Übersprechen zwischen den Führungsbereichen 28 und somit den durch in den Ausnehmungen strömenden Probenflüssigkeiten 19 stattfinden kann.

In einer gegenüber dem in Fig. 7 und Fig. 8 dargestellten Ausführungsbeispiel modifizierten Abwandlung erstreckt sich die Dämpfüngsschicht 27 bis über das Einkoppelgitter 10 und das Auskoppelgitter 15. wobei die Führungsbereiche 28 ebenfalls bis zu dem Einkoppelgitter 10 und dem Auskoppelgitter 15 verlängert sind.

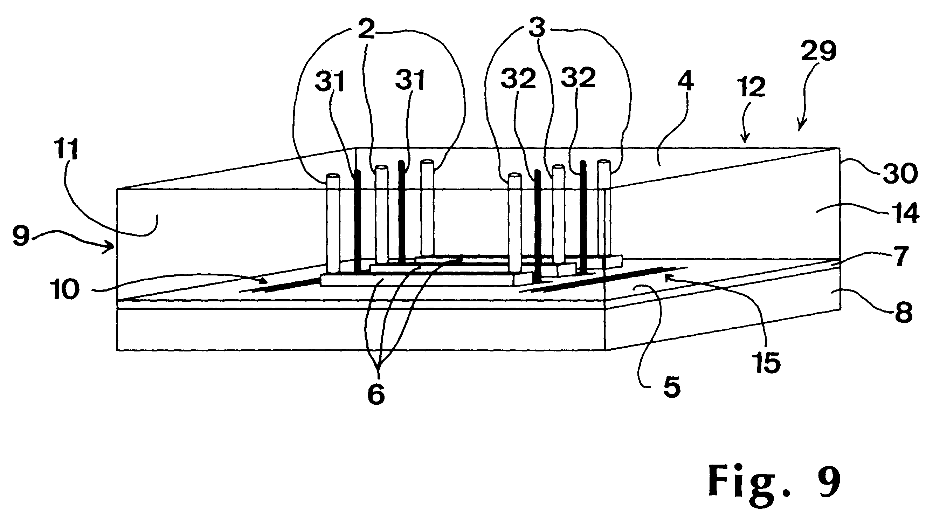

Fig. 9 zeigt in einer perspektivischen Darstellung ein weitere Ausführungsbeispiel einer Simultananalyseeinheit 29, deren Aufbau dem der Simultananalyseeinheit 25 bis auf die Massnahmen zum Verhindern eines Übersprechens entspricht. Demzufolge wird lediglich auf die Unterschiede eingegangen. Die Simultananalyseeinheit 29 verfügt über eine Flusszelle 30, die zwischen den drei Einlasskanälen 2, Auslasskanälen 3 und Ausnehmungen 6 jeweils einen Dämpfungseinlasskanal 31, einen Dämpfungsauslasskanal 32 und in der Darstellung gemäss Fig. 9 durch die Ausnehmungen 6 verdeckten, zu dem Schichtwellenleiter 7 hin offene Dämpfungsausnehmung aufweist. In der Darstellung gemäss Fig. 9 ist in die Dämpfungseinlasskanäle 31, Dämpfungsauslasskanäle 32 und die Dämpfungsausnehmung ein geschwärzt dargestelltes Dämpfungsmittel, beispielsweise mit einem im Spektralbereich von Anregungsstrahlung 18 und evaneszent angeregter Strahlung 21 absorbierenden Farbstoff versehene Flüssigkeit, eingefüllt.

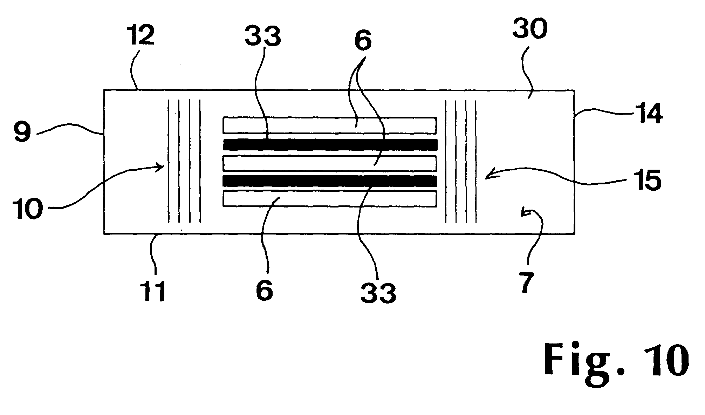

Fig. 10 zeigt eine Draufsicht auf die Flusszelle 30 in einer zu dem Schichtwellenleiter 7 parallelen, durch die Ausnehmungen 6 und die Dämpfungsausnehmungen 33 gelegten Schnittebene. Aus Fig. 10 ist ersichtlich, dass in diesem Ausführungsbeispiel die mit Dämpfungsflüssigkeit gefüllten Dämpfungsausnehmungen 33 parallel und zwischenliegend zwischen jeweils zwei Ausnehmungen 6 angeordnet sind, so dass ein Überkoppeln von Anregungsstrahlung 18 beziehungsweise evaneszent angeregter Strahlung 21 von einer Ausnehmung 6 zu anderen Ausnehmungen 6 aufgrund der Absorption oder Dämpfung des evaneszenten Feldes durch die in den Dämpfungsausnehmungen 33 eingebrachte und den Schichtwellenleiter 7 bedeckende Dämpfungsflüssigkeit unterbunden ist.

In einer Abwandlung des in Fig. 9 und Fig. 10 dargestellten Ausführungsbeispiels sind die Dämpfungsausnehmungen 33 bis in den Bereich des Einkoppelgitters 10 und des Auskoppelgitters 15 unter entsprechendem Versatz der Dämpfüngseinlasskanäle 31 und Dämpfungsauslasskanäle 32 verlängert, so dass auch insbesondere im Bereich des Auskoppelgitters 15 keine Überlagerung von im Bereich von verschiedenen Ausnehmungen 6 erzeugter evaneszent angeregter Strahlung 21 stattfinden kann.

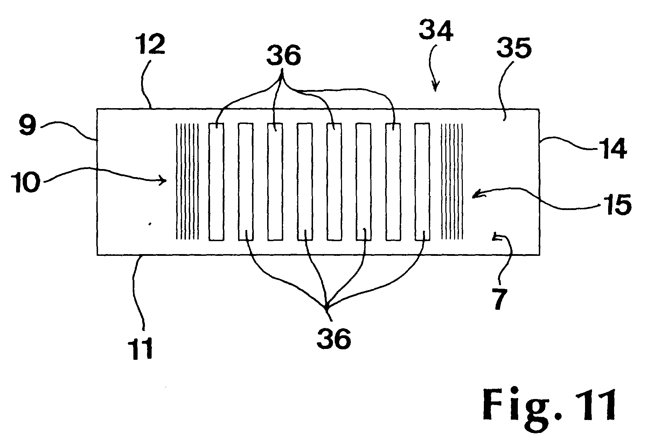

Fig. 11 zeigt eine weitere Simultananalyseeinheit 34 mit einer Flusszelle 35 in Draufsicht auf einen parallel zu einem Schichtwellenleiter 7 gelegten Schnitt. Die Flusszelle 35 verfügt über eine Anzahl von Ausnehmungen 36, die zweckmässigerweise äquidistant zwischen dem Einkoppelgitter 10 und dem Auskoppelgitter 15 beabstandet und quer zu der Ausbreitungsrichtung von über das Einkoppelgitter 10 eingekoppelte Anregungsstrahlung 18 ausgerichtet sind. Bei der Simultananalyseeinheit 34 sind ebenfalls unterschiedliche, in den Ausnehmungen 36 eingebrachte Probenflüssigkeiten 19 gleichzeitig über die evaneszent angeregten Strahlungen 21 untersuchbar, wobei hier eine definierte Überlagerung der verschiedenen Strahlungsanteile der evaneszent angeregten Strahlungen 21 herbeigeführt ist.

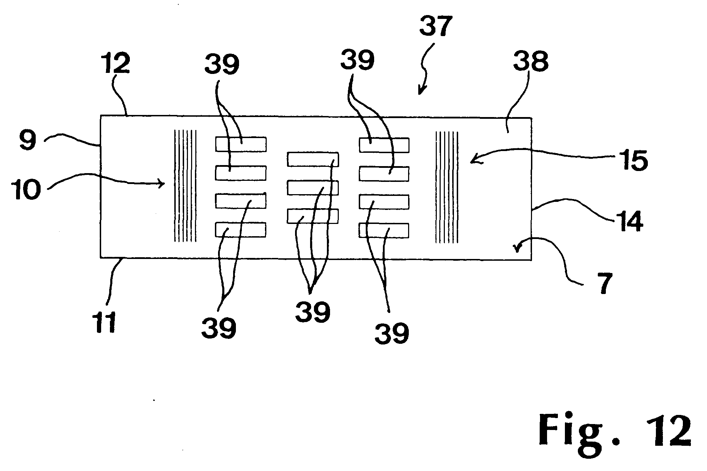

Fig. 12 zeigt ein weiteres Ausführungsbeispiel einer Simultananalyseeinheit 37 in einem Schnitt durch eine Flusszelle 38 in Draufsicht auf einen parallel zu dem Schichtwellenleiter 7 gelegten Schnitt. Die Flusszelle 38 verfügt über eine Anzahl von Ausnehmungen 39, die parallel zwischen den Seitenflächen 11, 12 ausgerichtet sind, sich jedoch jeweils nur über einen Bruchteil des Abstandes zwischen dem Einkoppelgitter 10 und dem Auskoppelgitter 15 erstrecken. In dem in Fig. 12 dargestellten Ausführungsbeispiel beträgt die Länge jeder Ausnehmung 39 etwa ein Fünftel des Abstandes zwischen dem Einkoppelgitter 10 und dem Auskoppelgitter 15. Die Ausnehmungen 39 sind in drei jeweils quer zu der Ausbreitungsrichtung von über das Einkoppelgitter 10 in den Schichtwellenleiter 7 eingekoppelter Anregungsstrahlung 18 verlaufenden Gruppen angeordnet, wobei die Ausnehmungen 39 der dem Einkoppelgitter 10 sowie dem Auskoppelgitter 15 benachbarten Randgruppen fluchtend und die Ausnehmungen 39 der mittleren Gruppe dazu in Lückenbereiche der Randgruppen quer versetzt angeordnet sind. Die in Fig. 12 dargestellte Simultananalyseeinheit 37 eignet sich insbesondere zum Untersuchen einer Vielzahl von Probenflüssigkeiten 19 mit bereits auf verhältnismässig kurzen Wechselwirkungsstrecken zum Nachweis ausreichend intensiver evaneszent angeregter Strahlung 21.

Insbesondere bei den in Fig. 11 und Fig. 12 dargestellten Ausführungsbeispielen von Simultananalyseeinheiten 34, 37 ist es zweckmässig, anstatt eines Auskoppelgitters 15 oder zusätzlich eine optische Sammeleinrichtung von in den freien Raum abgestrahlter, evaneszent angeregter Strahlung 21 vorzusehen, wobei die im Bereich jeder der Ausnehmungen 36, 39 evaneszent angeregte Strahlung einzeln analysierbar ist.

Die in den in Fig. 7 und Fig. 8, Fig. 9 und Fig. 10, Fig. 11 sowie Fig. 12 dargestellten Flusszellen 26, 30, 35, 38 sind ebenfalls vorzugsweise aus dem Material der in Fig. 1 dargestellten und dort besprochenen Flusszelle 1 hergestellt. Bei der Herstellung der Flusszellen 1, 26, 30, 35, 38 in einem Abformverfahren sind in besonders einfacher Weise die unterschiedlichen Geometrien und Anordnungen der Ausnehmungen 6, 36, 39 herstellbar, so dass auch verhältnismässig komplizierte Geometrien beziehungsweise Ausrichtungen bei einer einmaligen Verwendung noch wirtschaftlich sind. In diesem Zusammenhang sei angemerkt, dass es bei den geringen Herstellungskosten auch zweckmässig ist, bei der Herstellung einer Vorrichtung zur Erzeugung evaneszent angeregter Strahlung 21 mit einer Flusszelle 1, 26, 30, 35, 38 bereits vor dem Einsatz in einigen Anwendungen erforderliche Markermoleküle zum Nachweis spezifischer Reaktionen oder Erkennungselemente zur spezifischen Bindung später nachzuweisender Analyten auf den Wellenleiter 7 aufzubringen. Diese Markermoleküle sind durch die darüberliegende Flusszelle 1, 26, 30, 35, 38 geschützt.

Es ist zweckmässig, dass alle Flusszellen 1, 26, 30, 35, 38 aus einem nahezu fluoreszenzfreien Material gefertigt sind, um Überlagerungen von in den Flusszellen 1, 26, 30, 35, 38 evaneszent angeregter Fluoreszenzstrahlung mit in Probenflüssigkeit 19 zur Analyse evaneszent angeregter Strahlung 21 in nennenswerten Umfang zu vermeiden. Es ist weiterhin zweckmässig, dass die Flusszellen 1, 26, 30, 35, 38 beispielsweise an den Stirnseiten 9, 14, den Seitenflächen 11, 12 sowie der Deckfläche 4 strahlungsabsorbierend sind, um Einkopplungen von Umgebungsstrahlung in den Schichtwellenleiter 7 zu unterbinden.

In diesem Zusammenhang ist in Abwandlungen vorgesehen, dass die Flusszellen 1, 26, 30, 35, 38 bis auf einen unmittelbar an den Schichtwellenleiter 7 angrenzenden Eindringbereich für den evaneszenten Anteil der Anregungsstrahlung 18 und der evaneszent angeregten Strahlung 21 bei der Herstellung im Innenbereich mit einem über den genutzten Spektralbereich absorbierenden Farbstoff versehen ist. Dadurch wird eine so gut wie vollständige Unterdrückung von Streulichteinkopplungen erzielt, die auch bei Beschädigungen der nach aussen weisenden Oberflächen 4, 9, 11, 12, 14 der Flusszellen 1, 26, 30, 35, 38 aufrechterhalten bleibt.

## Patentansprüche

1. Flusszelle zum Aufbringen auf einen Wellenleiter (7) einer Vorrichtung zur Erzeugung evaneszent angeregter Strahlung (21) mit wenigstens einem ersten Probenkanal (2), wenigstens einem zweiten Probenkanal (3) und wenigstens einer an einer Auflageoberfläche (5) offenen, sich zwischen einem ersten Probenkanal (2) und einem zweiten Probenkanal (3) erstreckenden Ausnehmung (6), wobei die Flusszelle (1, 26, 30, 35, 38) aus einem schmiegsamen Material besteht, das auf den Wellenleiter (7) die oder jede Ausnehmung (6) dicht verschliessend aufbringbar ist

2. Flusszelle nach Anspruch 1, dadurch gekennzeichnet, dass sie wenigstens an der Auflageoberfläche (5) in einem Eindringbereich sowohl für Anregungsstrahlung (18) als auch für evaneszent angeregte Strahlung (21) transparent ist.

3. Flusszelle nach Anspruch 2, dadurch gekennzeichnet, dass die oder jede erste Probendurchtrittsöffnung (16) sowie der an die erste Probendurchtrittsöffnung (16) angrenzende Bereich der Ausnehmung (6) in Ausbreitungsrichtung von Anregungsstrahlung (18) dem Einkoppelelement (10) nachgeordnet ist und die Flusszelle (1, 26, 30, 35, 38) so dimensioniert ist, dass das oder jedes Einkoppelelement (10) bedeckbar ist.

4. Flusszelle nach einem der Ansprüche 1 bis 3, dadurch gekennzeichnet, dass das Material auf einem Wellenleiter (7) selbsthaftend ist.

5. Flusszelle nach einem der Ansprüche 1 bis 4, dadurch gekennzeichnet, dass das Material ein Polymer ist.

6. Flusszelle nach Anspruch 5, dadurch gekennzeichnet, dass das Polymer ein Polydimethylsiloxan ist.

7. Flusszelle nach einem der Ansprüche 1 bis 6, dadurch gekennzeichnet, dass mehrere zu der Ausbreitungsrichtung von Anregungsstrahlung (18) längsverlaufend angeordnete Ausnehmungen (6, 39) vorgesehen sind.

8. Flusszelle nach einem der Ansprüche 1 bis 6, dadurch gekennzeichnet, dass mehrere zu der Ausbreitungsrichtung von Anregungsstrahlung (18) querverlaufend angeordnete Ausnehmungen (36) vorgesehen sind.

9. Flusszelle nach einem der Ansprüche 1 bis 8, dadurch gekennzeichnet, dass die Flusszelle (1, 26, 30, 35, 38) so dimensioniert ist, dass ein oder jedes Auskoppelelement (15) einer Vorrichtung zur Erzeugung evaneszent angeregter Strahlung (21) bedeckbar ist.

10. Flusszelle nach einem der Ansprüche 1 bis 9, dadurch gekennzeichnet, dass jede einen zweiten Probenkanal (3) mit einer Ausnehmung (6) verbindende zweite Probendurchtrittsöffnung (17) sowie der an die zweite Probendurchtrittsöffnung (17) angrenzende Bereich der Ausnehmung (6) zwischen dem Einkoppelelement (10) und einem Auskoppelelement (15) einer Vorrichtung zur Erzeugung evaneszent angeregter Strahlung (21) zur Auskopplung evaneszent angeregter Strahlung (21) aus einem Wellenleiter (7) angeordnet ist.

11. Flusszelle nach einem der Ansprüche 1 bis 10, gekennzeichnet durch eine bis auf einen Eindringbereich von Anregungsstrahlung (18) und evaneszent angeregter Strahlung (21) an der Auflageoberfläche (5) vorhandene Absorbierbarkeit von Strahlung im Spektralbereich von Anregungsstrahlung (18) und evaneszent angeregter Strahlung (21).

12. Flusszelle nach einem der Ansprüche 1 bis 10, dadurch gekennzeichnet, dass die Obenflächen (4, 5, 9, 11, 12, 14) bis auf von Anregungsstrahlung (18) und/oder evaneszent angeregter Strahlung (21) beaufschlagbaren Bereich der Auflageoberfläche (5) im Spektralbereich von Anregungsstrahlung (18) und evaneszent angeregter Strahlung (21) absorbierend sind.

13. Flusszelle nach einem der Ansprüche 1 bis 12, dadurch gekennzeichnet, dass wenigstens ein Dämpfungseinlasskanal (31), wenigstens ein Dämpfungsauslasskanal (32) und wenigstens eine sich zwischen einem Dämpfungseinlasskanal (31) und einem Dämpfungsauslasskanal (32) erstreckende Dämpfungsausnehmung (33) vorgesehen sind, wobei die Dämpfungsausnehmungen (33) entsprechend der oder jeder Ausnehmung (6) zu einer Oberfläche (5) offen ist.

14. Flusszelle nach einem der Ansprüche 1 bis 12, dadurch gekennzeichnet, dass sich der Brechungsindex beim Übergang von Material der Flusszelle (1, 26, 30, 35, 38) zu einer in der oder jeder Ausnehmung (6) enthaltenen Probenflüssigkeit in Ausbreitungsrichtung von Anregungsstrahlung (18) durch eine Materialverjüngung kontinuierlich ändert.

15. Vorrichtung zur Erzeugung evaneszent angeregter Strahlung mit einem Wellenleiter (7), auf den Probensubstanz aufbringbar ist, **dadurch gekennzeichnet**, dass eine auf den Wellenleiter (7) aufgebrachte Flusszelle nach einem der Ansprüche 1 bis 14 vorgesehen ist.

16. Vorrichtung nach Anspruch 15, dadurch gekennzeichnet, dass wenigstens ein Auskoppelelement (15) zur Auskopplung von evaneszent angeregter Strahlung (21) aus dem Wellenleiter (7) vorgesehen ist, wobei das oder jedes Auskoppelelement (15) von der Flusszelle (1, 26, 30, 35, 38) bedeckt ist.

17. Vorrichtung nach Anspruch 16, dadurch gekennzeichnet, dass das oder jedes Auskoppelelement (15) so angeordnet ist, dass die oder jede Ausnehmung (6) sowie die an Probendurchtrittsöffnungen (16, 17) angrenzenden Bereiche der Ausnehmung (6) zwischen dem oder jedem Einkoppelelement (10) und dem oder jedem Auskoppelelement (15) angeordnet sind.

18. Vorrichtung nach einem der Ansprüche 15 bis 17, dadurch gekennzeichnet, dass zwischen der Flusszelle (1, 26, 30, 35, 38) und dem Wellenleiter (7) beidseitig der oder jeder Ausnehmung (6) im Spektralbereich von Anregungsstrahlung 18 und evaneszent angeregter Strahlung (21) absorbierendes Dämpfungsmaterial (27) vorgesehen ist.

19. Vorrichtung nach Anspruch 18, dadurch gekennzeichnet, dass das Dämpfungsmaterial (27) als Immersion flächig aufgetragen ist.

20. Vorrichtung nach Anspruch 18, dadurch gekennzeichnet, dass eine Flusszelle nach Anspruch 11 vorgesehen ist, bei der die oder jede Dämpfungsausnehmung (33) mit Dämpfungsmaterial füllbar ist.
